# EUROPÄISCHE PATENTANMELDUNG

(11) **EP 3 960 420 A1**
(43) Veröffentlichungstag der Anmeldung: **02.03.2022**
(21) Anmeldenummer: 21170163.6
(22) Anmeldetag: 26.08.2020
(51) Int. Cl.: B29C 45/26, B29C 45/44, B60N 3/04, A44B 18/00

(54) **HAKENKLETTVERSCHLUSS-VERBINDUNGSTEIL**

(62) Teilanmeldung aus: 20192919.7
(71) Anmelder: Gummi - und Kunststoffwerk G. SCHÖNEK GmbH & Co KG, 93149 Nittenau (DE)
(72) Erfinder: Sigl, Michael, 93149 Nittenau (DE)
(74) Vertreter: Rupprecht, Kay

(57) **Zusammenfassung**

Ein Hakenklettverschluss-Verbindungsteil ist mit einer Vielzahl von Haken (7) versehen, welche auf einer Grundplatte (16) angeordnet sind. Die Haken (7) weisen einen Hakenfuß (8) und einen Hakenkopf (9) auf. Hakenfuß (8) und Hakenkopf (9) sind innerhalb einer Ebene (10) angeordnet. Die Ebene (10) und die Grundplatte (16) sind in einem Winkel (ß) größer 90° zueinander angewinkelt.

## Beschreibung

Die Erfindung betrifft eine Vorrichtung zur Herstellung eines Hakenklettverschluss-Verbindungsteils mittels eines Spritzgießverfahrens, ein Spritzgussverfahren zum Herstellen eines Hakenklettverschluss-Verbindungsteils, und ein Hakenklettverschluss-Verbindungsteil.

Bei einem Klettverschluss wird ein Hakenklettverschluss-Verbindungsteil, welches eine Vielzahl von Kletthaken aufweist, mit einem Schlaufenelement bzw. Flauschteil, welches Schlaufen bzw. Fasern aufweist, kontaktiert, wodurch sich die Kletthaken in den Schlaufen bzw. Fasern verhaken. Dadurch entsteht eine reversibel lösbare Verbindung zwischen Hakenklettverschluss-Verbindungsteil und Schlaufenelement.

Diese Verbindung kann durch Abziehen des Schlaufenelements vom Hakenklettverschluss-Verbindungsteil wieder gelöst werden. Diese reversibel lösbare Verbindung kommt auf vielen Gebieten für ein wieder lösbares Befestigen von Gegenständen oder Bauteilen zum Einsatz. Beispielsweise werden bei Kraftfahrzeugen Bodenmatten am Fahrzeugboden gegen Verrutschen oder Abheben mittels einer Klettverschlussverbindung gesichert, indem am Boden des Innenraums des Fahrzeugs Befestigungsmittel verankert werden, welche ein Hakenklettverschluss-Verbindungsteil aufweisen, das beim Kontaktieren eines Flauschteils einer Fußmatte eine reversible Befestigung der Fußmatte am Fahrzeugboden ermöglicht.

Eine Klettverschlussverbindung in Form einer Befestigungsvorrichtung für eine Kraftfahrzeug-Fußmatte wird herkömmlicherweise dadurch bereitgestellt, dass ein Grundkörper mit einer Vielzahl von Kletthaken mittels chemischer oder thermischer Klebeverbindungen, beispielsweise mit lösungsmittelhaltigen Klebstoffen oder Heißkleber, auf ein beispielsweise kreisförmiges Trägerteil aufgeklebt wird, und dieser Trägerteil wird am Boden des Fahrzeuginnenraums mit einem Befestigungsmittel befestigt. Abgesehen von der Umweltbelastung durch lösungsmittelhaltige Substanzen sind weder die chemischen noch die thermischen Klebeverbindungen zufriedenstellend. Denn es besteht die Gefahr, dass sich der Grundkörper mit der Vielzahl von Kletthaken vom Trägerteil löst, wenn die Temperatur und/oder die relative Luftfeuchtigkeit im Fahrzeug zu hoch sind. Ferner besteht die Gefahr der Ablösung auch, wenn die Fußmatte länger im Gebrauch war, und sich der Grundkörper mit der Vielzahl von Kletthaken durch mechanische Beanspruchung, wie z.B. Fußbewegungen der im Fahrzeug befindlichen Personen, vom Trägerteil löst.

Im Stand der Technik sind auch Alternativen zum oben beschriebenen herkömmlichen Aufkleben des Grundkörpers mit Vielzahl von Kletthaken auf ein Trägerteil bekannt.

WO 2014/191089 A1 offenbart ein Spritzgießwerkzeug und -verfahren, in welchem im ersten Schritt ein eine Komponente eines Haftverschlusses bildendes Verschlussteil mit Haft- und/oder Verhakungselementen hergestellt wird und als Einlegeteil in die Spritzgießform eingebracht wird, und in einem zweiten Schritt mittels eines aufgeschäumten Kunststoffmaterials ein Trägerteil gebildet wird, das sich mit dem Einlegeteil verbindet. Das heißt, das Einlegeteil und Trägerteil von WO 2014/191089 sind nicht einstückig gebildet.

DE 10 2009 054 896 A1 offenbart ein Werkzeug zum Erzeugen eines Kletttellers mittels eines Spritzgießverfahrens, mit welchem die Kletthaken zusammen mit dem Klettteller in einem Schritt gebildet werden. Bei dem so erhaltenen Klettteller sind die Kletthaken senkrecht auf der tellerförmigen Grundplatte des Kletttellers angeordnet. Aufgrund dieser senkrechten Anordnung werden die Kletthaken mit einem Hakenkopf gebildet, welcher in etwa den halben Querschnitt des Hakenfußes aufweist, da der Hakenkopf nur im zweiten Werkzeugteil des Werkzeugs geformt werden kann, weil ansonsten die ersten und zweiten Werkzeugteile des Werkzeugs nach dem Spritzgießen des Kletttellers nicht gegeneinander verschiebbar wären.

Aufgabe der vorliegenden Erfindung ist es, eine Vorrichtung, ein Verfahren sowie ein Hakenklettverschluss-Verbindungsteil bereitzustellen, welche ein leichtes Entfernen bzw. Auswerfen der Haken eines spritzgegossenen Hakenklettverschluss-Verbindungsteils innerhalb einer Spritzgussform ermöglicht. Ferner ist es die Aufgabe der vorliegenden Erfindung, ein Hakenklettverschluss-Verbindungsteil bereitzustellen, welches eine besonders stabile Klettverschlussverbindung mit einem Flauschteil gewährleistet.

Diese Aufgabe wird gelöst durch ein Hakenklettverschluss-Verbindungsteil gemäß Anspruch 1.

Insbesondere wird diese Aufgabe gelöst durch eine Vorrichtung zur Herstellung eines Hakenklettverschluss-Verbindungsteils mittels eines Spritzgießverfahrens, umfassend:
Eine Spritzgussform mit einer Vielzahl von ersten und zweiten Halbformen, wobei jede erste Halbform eine Vielzahl von ersten Hohlräumen in einer ersten Oberfläche und jede zweite Halbform eine Vielzahl von zweiten Hohlräumen in einer zweiten Oberfläche aufweist, und erste und zweite Oberflächen sich gegenüberliegen und kontaktieren, so dass der erste und zweite Hohlraum gemeinsam einen Gesamthohlraum in Hakenform bilden,
wobei die Hakenform einen Hakenfuß und einen Hakenkopf aufweist, und Hakenfuß und Hakenkopf innerhalb einer Ebene angeordnet sind, wobei der Hakenfuß mindestens durch den ersten Hohlraum gebildet wird und der Hakenkopf mindestens durch den zweiten Hohlraum gebildet wird,
wobei die Spritzgussform eine Längsachse aufweist, entlang der die zweiten Halbformen gegenüber den ersten Halbformen verschiebbar sind,
dadurch gekennzeichnet, dass die Ebene und die Längsachse zueinander angewinkelt sind.

Die der Erfindung zu Grunde liegende Idee besteht darin, dass die ersten und zweiten Halbformen so gebildet sind, dass die Ebene, innerhalb welcher der Hakenfuß und der Hakenkopf der Hakenform angeordnet sind, und die Längsachse der Spritzgussform zueinander angewinkelt sind. Dies ermöglicht zum einen, dass ein in der Spritzgussform spritzgegossener Haken leicht durch Verschieben der zweiten Halbformen gegenüber der ersten Halbformen entlang der Längsachse der Spritzgussform aus den ersten und zweiten Halbformen entfernt bzw. ausgeworfen werden kann, und ermöglicht die Bereitstellung einer vorteilhaften Dimensionierung des Hakenkopfes sowie einer vorteilhaften angewinkelten Anordnung der spritzgegossenen Haken auf dem Hakenklettverschluss-Verbindungsteil.

Nachfolgend werden die Begriffe "Hakenform" bzw. "Haken", "Halbform" "Oberfläche" meist im Singular verwendet, wobei damit exemplarisch einer bzw. eine der Vielzahl von "Haken(formen)", "Halbformen" oder "Oberflächen" der erfindungsgemäßen Vorrichtung gemeint sind.

Unter dem hier verwendeten Begriff "Hakenklettverschluss-Verbindungsteil" ist ein eine Vielzahl von Haken aufweisender Gegenstand zu verstehen, dessen Haken mit einem Schlaufenelement bzw. Flauschteil, welches Schlaufen bzw. Fasern aufweist, beim Kontaktieren verhaken. Dadurch entsteht eine reversibel lösbare Verbindung zwischen Hakenklettverschluss-Verbindungsteil und Schlaufenelement.

Unter dem hier verwendeten Begriff "Hakenkopf" ist eine Struktur zu verstehen, welche ein Verhaken mit einer filz- oder faserartigen Struktur eines Schlaufenelements bzw. Flauschteils ermöglicht. Eine solche Struktur kann eine gebogene bzw. runde Struktur, zum Beispiel eine halbkreisförmige Struktur oder eine Struktur, welche weniger als einen Halbkreis darstellt, z.B. 1/3 Kreis, oder mehr als einen Halbkreis darstellt, z.B. einen 5/8 Kreis, sein. Alternativ kann diese Struktur auch eine winkelige bzw. eckige Form aufweisen, wie zum Beispiel eine umgekehrte V-, oder eine eckige, umgekehrte U-Form. Auch Mischformen der vorgenannten Strukturen sind möglich, z.B. umgekehrte V- oder U-Formen mit kreisförmig abgerundeten Ecken, oder gebogene bzw. runde Strukturen, welche durch geradlinige Elemente ergänzt sind, wie z.B. eine abgerundete, umgekehrte U-Form. Bevorzugt hat der Hakenkopf eine 1/3 bis 5/8 Kreisform. Die Hakenformen können auch als Doppelhaken ausgebildet sein, welche man erhält, indem man zwei Hakenköpfe an einem Hakenfuß bildet, und diese Hakenfüße in 180° entgegengesetzte Richtungen zeigen.

Unter dem hier verwendeten Begriff "Hakenfuß" ist eine Struktur zu verstehen, welche den "Hakenkopf" mit einem Grundkörper, z.B. einer Grundplatte, des Hakenklettverschluss-Verbindungsteils verbindet. Bevorzugt weist der "Hakenfuß" eine geradlinige Struktur auf. Bei einem kreisförmig gekrümmten Hakenkopf beginnt der Hakenkopf dort, wo die Krümmung des Hakenkopfs beginnt. Bei einer winkeligen bzw. eckigen Form des Hakenkopfs endet der Hakenfuß und beginnt der Hakenkopf an einem Punkt, wo eine imaginäre Linie, welche vom Ende des Hakenkopfes ausgeht, den Hakenfuß als Senkrechte schneidet. Allerdings ist die Trennung zwischen Hakenkopf und Hakenfuß mittels des vorbeschriebenen Punktes rein schematisch. Denn bei einer dreidimensionalen Ausgestaltung kann ein Teil des Hakenfußes diesen schematischen Trennpunkt entlang der Längsrichtung des Hakenfußes höhenmäßig unter- oder überschreiten, z.B. wenn der Hakenkopf im zweiten Hohlraum der zweiten Halbform gebildet wird, und der Hakenfuß im ersten Hohlraum der ersten Halbform und im zweiten Hohlraum der zweiten Halbform gebildet ist.

Unter dem hier verwendeten Begriff "Längsachse" der Spritzgussform ist eine Achse zu verstehen, entlang der die zweiten Halbformen gegenüber den ersten Halbformen verschiebbar sind. Das heißt, die Verschiebung der ersten und zweiten Halbformen kann auf oder parallel zur Längsachse der Spritzgussform erfolgen. Vorzugsweise steht die Längsachse der Spritzgussform senkrecht zu einer Fläche der Spritzgussform, welche die Seite einer Grundplatte des Hakenklettverschluss-Verbindungsteils formt, auf der die Vielzahl von Haken gebildet werden, wobei diese Fläche vorzugsweise ganz oder teilweise durch die weiter unten beschriebenen dritten Oberflächen der ersten Halbformen und vierten Oberflächen der zweiten Halbformen gebildet wird.

Neben der speziellen Spritzgussform, die mit ersten und zweiten Halbformen ausgestaltet ist, weist die Vorrichtung die üblichen Mittel einer Spritzgussvorrichtung auf, wie z.B. Mittel zum Aufheizen des in die Spritzgussform einzuspritzenden Kunststoff, Anspritzkanäle für die Spritzgussform, um geschmolzenen Kunststoff in die Spritzgussform zu pressen, und Mittel zum geeigneten Öffnen bzw. Schließen der Spritzgussform.

Die Ebene, innerhalb welcher der Hakenfuß und der Hakenkopf der Hakenform angeordnet sind, und die Längsachse der Spritzgussform sind vorzugsweise mit einem Winkel von bis zu 40° zueinander angewinkelt, weiter bevorzugt 5° bis 30°, und besonders bevorzugt 10° bis 20°. Diese bevorzugte Anwinkelung von Ebene und Längsachse ist vorteilhaft, weil hierdurch ermöglicht wird, die spritzgegossenen Haken leichter aus den ersten und zweiten Hohlräumen zu entfernen bzw. auszuwerfen, und bei Bedarf kann dank dieser Winkelwahl der Hakenkopf der Hakenform vollständig in dem zweiten Hohlraum gebildet werden. Die im Zusammenhang mit der angewinkelten Anordnung von der Ebene und der Längsachse zueinander angegebenen Winkel α schließen auch negative Winkel ein, das heißt -40° zueinander angewinkelt, weiter bevorzugt -5° bis -30°, und besonders bevorzugt -10° bis -20°. Das heißt, innerhalb der ersten und zweiten Halbformen können die Hakenformen gegenläufig gebildet sein, also einmal mit positivem Winkel und einmal mit negativem Winkel.

Es ist bevorzugt, dass die ersten und zweiten Oberflächen der Vielzahl von ersten und zweiten Halbformen parallel zueinander angeordnet sind, weiter bevorzugt parallel zur Längsachse. Diese parallele Anordnung ermöglicht es, dass die ersten und zweiten Halbformen jeweils gleichartig gestaltet werden können, d.h. die Ausgestaltung bzw. Herstellung der ersten und zweiten Halbformen ist einfacher im Vergleich zu einer nicht-parallelen Anordnung. Besonders vorteilhaft ist es, wenn die ersten und zweiten Oberflächen der Vielzahl von ersten und zweiten Halbformen parallel zur Längsachse zueinander angeordnet sind. Dies ermöglicht es, dass sowohl die ersten als auch die zweiten Halbformen entlang der Längsachse gegeneinander beliebig nach unten oder oben verschiebbar sind.

Vorzugsweise wird der Hakenfuß durch den ersten und zweiten Hohlraum gebildet, und der Hakenkopf wird durch den zweiten Hohlraum gebildet. Dies hat den Vorteil, dass mittels Verschieben der zweiten Halbform gegenüber der ersten Halbform der spritzgegossene Haken leicht entfernt bzw. entformt werden kann, da der Hakenkopf komplett im zweiten Hohlraum ausgebildet ist, d.h. es kann durch Verschieben z.B. auf den Hakenkopf gedrückt werden, um den spritzgegossenen Haken leicht zu entfernen bzw. entformen. Ferner ist es bei dieser Ausführungsform vorteilhaft, dass dadurch, dass der Hakenkopf nur in dem zweiten Hohlraum gebildet ist, der Hakenkopf des spritzgegossenen Hakens das Verschieben der ersten und zweiten Halbform gegeneinander nicht blockieren kann.

Der Hakenkopf weist bevorzugt einen Querschnitt bzw. eine Querschnittsfläche gleich oder größer als der Querschnitt bzw. die Querschnittfläche des Hakenfußes auf. Dies hat den Vorteil, dass mittels der erfindungsgemäßen Vorrichtung spritzgegossene Kletthaken bereitgestellt werden können, welche besonders stabil sind, da die Dimensionierung des Hakenkopfs einen wichtigen Einfluss auf die Stabilität der Klettverbindung des Hakenklettverschluss-Verbindungsteils mit einem Flauschteil hat. Denn wenn der Hakenkopf vom Querschnitt bzw. der Querschnittsfläche her geringer dimensioniert ist als der Hakenfuß, besteht die Gefahr, dass beim Ziehen am Flauschteil die Hakenköpfe der Kletthaken des Hakenklettverschluss-Verbindungsteils zumindest teilweise abreißen, wodurch die Klettverbindung geschwächt wird.

Unter dem hier verwendeten Begriff "Spritzgussform" ist ein Gesamthohlraum in Form eines Hakenklettverschluss-Verbindungsteils zu verstehen, wobei die Vielzahl von ersten und zweiten Halbformen die Vielzahl von Haken des Hakenklettverschluss-Verbindungsteils sowie die Oberfläche eines Grundkörpers bilden, wenn die Spritzgussform mit geschmolzenem Kunststoff ausgespritzt wird. Die Spritzgussform weist einen oder mehrere Anspritzkanäle auf, welche ein Ausspritzen der Spritzgussform mit geschmolzenem Kunststoff ermöglicht bzw. ermöglichen. Der Grundkörper des Hakenklettverschluss-Verbindungsteils kann prinzipiell eine beliebige Form aufweisen, bevorzugt ist der Grundkörper in Form einer Grundplatte gebildet, d.h. einem planaren Körper mit einer gewissen Dicke, auf welchem die Vielzahl von Haken gebildet werden. Optional kann der Grundkörper Befestigungsmittel aufweisen, die eine Befestigung des Grundkörpers mit der Vielzahl von Haken an einem weiteren Gegenstand erlaubt. Somit kann die "Spritzgussform" einen Gesamthohlraum darstellen, welcher neben der durch die Vielzahl von ersten und zweiten Halbformen gebildeten Vielzahl von Haken und der Oberfläche des Grundkörpers, auf welcher die Vielzahl der Haken gebildet ist, auch die weitere Form des Grundkörpers mit optionalem Befestigungsmittel abbildet, so dass ein Hakenklettverschluss-Verbindungsteil mit Vielzahl von Haken und Grundkörper mit optionalem Befestigungsmittel in der Spritzgussform einstückig gebildet werden kann.

Die Spritzgussform der erfindungsgemäßen Vorrichtung ist vorzugsweise so gestaltet, dass die erste Halbform eine dritte Oberfläche und die zweite Halbform eine vierte Oberfläche aufweisen, und die dritte Oberfläche an die erste Oberfläche angrenzt und die vierte Oberfläche an die zweite Oberfläche angrenzt, wobei die dritte und vierte Oberfläche gemeinsam eine Öffnung bilden, die den Querschnitt des unteren Endes des Hakenfußes darstellt. Bevorzugt mündet diese Öffnung in einen weiteren Hohlraum in Form einer Grundplatte des Hakenklettverschluss-Verbindungsteils, so dass beim Ausspritzen der Spritzgussform ein Hakenklettverschluss-Verbindungsteil mit einer Vielzahl von auf der Grundplatte gebildeten Haken erhalten wird. Diese Ausgestaltung der Spritzgussform ist vorteilhaft, um ein Hakenklettverschluss-Verbindungsteil mit einer Grundplatte, auf welcher eine Vielzahl von Kletthaken gebildet sind, bereitzustellen.

Der weitere Hohlraum in Form einer Grundplatte des Hakenklettverschluss-Verbindungsteils kann auf einer Seite, die den dritten und vierten Oberflächen gegenüberliegt, ferner einen Hohlraum aufweisen, welcher die Form eines Befestigungsmittels aufweist, so dass beim Ausspritzen der Spritzgussform ein Hakenklettverschluss-Verbindungsteil mit einer Vielzahl von auf der Grundplatte gebildeten Haken erhalten wird, wobei die Grundplatte auf der die Vielzahl von Haken aufweisenden Seite gegenüberliegenden Seite ein Befestigungsmittel gebildet wird.

Es ist bevorzugt, dass die dritte Oberfläche rechtwinklig zur ersten Oberfläche und die vierte Oberfläche rechtwinklig zur zweiten Oberfläche ist. Dies ermöglicht ein vorteilhaft einfache Verschiebbarkeit der ersten und zweiten Halbformen gegeneinander, und somit auch ein vorteilhaftes Entfernen bzw. Auswerfen aus der Spritzgussform.

Die zweiten Halbformen sind vorzugsweise in Richtung des weiteren Hohlraums in Form einer Grundplatte des Hakenklettverschluss-Verbindungsteils verschiebbar, während die ersten Halbformen ihre Position beibehalten. Dies ermöglicht ein besonders vorteilhaftes Entfernen bzw. Entformen. Denn wird der weitere Hohlraum in Form einer Grundplatte auf der Seite, welche den ersten und zweiten Hakenformen gegenüberliegt, geöffnet, so kann durch die vorgenannte Verschiebung mittels der zweiten Halbformen Druck auf die spritzgegossenen Hakenköpfe und die spritzgegossene Grundplatte ausgeübt werden, wodurch der Hakenfuß des spritzgegossenen Hakens aus dem ersten Hohlraum herausgedrückt wird.

In der erfindungsgemäßen Vorrichtung weist bevorzugt mindestens eine erste Halbform auf zwei sich gegenüberliegenden Seiten jeweils eine erste Oberfläche auf, und mindestens eine zweite Halbform weist auf zwei sich gegenüberliegenden Seiten jeweils eine zweite Oberfläche auf. Diese Ausgestaltung ermöglicht es, dass mit der erfindungsgemäßen Vorrichtung ein Hakenklettverschluss-Verbindungsteil mit einer hohen Dichte an Haken bereitgestellt werden kann.

Die dritten und vierten Oberflächen sind vorzugsweise planar. Dies ermöglicht die Herstellung eines Hakenklettverschlussteils mit planarer Grundplatte.

Die ersten und zweiten Oberflächen sind vorzugsweise planar. Dadurch wird eine einfache Gestaltung und Herstellung der ersten und zweiten Halbformen ermöglicht, und eine leichte Verschiebbarkeit der ersten und zweiten Halbformen gegeneinander ermöglicht.

Es ist bevorzugt, dass die zweiten Hohlräume so gebildet sind, dass die Enden der Hakenkopfformen jeweils die gleiche Orientierung aufweisen.

Die ersten und zweiten Halbformen sind vorzugsweise konzentrisch zueinander angeordnet, weiter bevorzugt sind sie kreisförmig konzentrisch zueinander angeordnet. Eine solche konzentrische Anordnung hat den Vorteil, dass beim Entfernen bzw. Auswerfen durch Verschieben der konzentrischen ersten und zweiten Halbformen gegeneinander eine relativ gleichmäßige Kräfteverteilung beim Drücken auf die spritzgegossenen Hakenköpfe bzw. die spritzgegossene Grundplatte gegeben ist.

Wenn die ersten und zweiten Halbformen kreisförmig konzentrisch zueinander angeordnet sind, so ist es bevorzugt, dass alle zweiten Hohlräume so gebildet sind, dass alle Hakenkopfformen im Wesentlichen tangential zur Kreisform der zweiten Halbform gebildet sind und die Enden der Hakenkopfformen jeweils die gleiche Orientierung aufweisen. "Im Wesentlichen tangential" bedeutet in diesem Kontext, dass die Ebene, innerhalb welcher Hakenfuß und Hakenkopf angeordnet sind, senkrecht bzw. mit einer Toleranz von ± 5° auf einem Berührungsradius der zweiten Halbform steht. Diese jeweils gleiche Orientierung kann, wenn eine erste Halbform auf zwei sich gegenüberliegenden Seiten jeweils eine erste Oberfläche aufweist und eine zweite Halbform auf zwei sich gegenüberliegenden Seiten jeweils eine zweite Oberfläche aufweist, entweder auf beiden gegenüberliegenden Seiten gleich oder entgegengesetzt sein, bevorzugt ist sie entgegengesetzt. Weisen die gegenüberliegenden Seiten von erster Halbform und zweiter Halbform jeweils entgegengesetzte Orientierungen bezüglich der Hakenformen auf, so erhält man mittels der erfindungsgemäßen Vorrichtung ein Hakenklettverschluss-Verbindungsteil, in welchem die Vielzahl der kreisförmig konzentrisch angeordneten Haken in einem Kreis die Enden der Hakenköpfe tangential zur Kreisform die gleiche Orientierung aufweisen, während in einem zu diesem Kreis von Haken benachbarten Kreis die Enden der Hakenköpfe tangential zur Kreisform eine Orientierung aufweisen, welche der des benachbarten Kreises entgegengesetzt ist. Diese kreisförmig konzentrische Anordnung der Haken, in welcher die Hakenköpfe der benachbarten Kreise jeweils eine entgegengesetzte tangentiale Orientierung zur Kreisform aufweisen, wird hier auch als "kreisförmig konzentrisch gegeneinander" bezeichnet. Diese Anordnung ermöglicht eine besonders vorteilhafte, stabile Klettverbindung mit einem Flauschteil.

Gemäß einer bevorzugten Ausführungsform ist die zweite Halbform so gebildet, dass der Hakenkopf als Doppelhakenkopf, dessen Hakenköpfe in 180° entgegengesetzte Richtungen zeigen, geformt wird. Dies hat den Vorteil, dass ein Kletthaken mit 2 Hakenköpfen gebildet werden kann, wodurch sich die Stabilität der Klettverbindung im Vergleich zu Haken mit nur einem Hakenkopf quasi verdoppelt.

Der Querschnitt bzw. die Querschnittsfläche von Hakenfuß und/oder Hakenkopf kann prinzipiell jede Form aufweisen, beispielsweise mehreckig, wie zum Beispiel dreieckig, viereckig, fünfeckig oder sechseckig, im Wesentlich kreisförmig, oder eine Mischform aus mehreckig und im Wesentlichen kreisförmig, z.B. ein mehreckiger Querschnitt, in welchem die Ecken abgerundet sind. Es ist bevorzugt, dass der Querschnitt bzw. die Querschnittsfläche von Hakenfuß und/oder Hakenkopf im Wesentlichen kreisförmig ist. "Im Wesentlichen kreisförmig" bedeutet hier kreisförmig, kreissegmentförmig oder oval, wobei es bevorzugt ist, dass der Querschnitt von Hakenfuß und/oder Hakenkopf kreisförmig oder kreissegmentförmig ist. Ein kreissegmentförmiger Querschnitt des Hakenkopfs kann beispielweise dadurch gebildet werden, dass der Kreisbogen des Kreissegments durch den zweiten Hohlraum der zweiten Halbform gebildet wird, und die Kreissehne des Kreissegments durch eine plane erste Oberfläche der ersten Halbform.

Die durch die dritte und vierte Oberfläche gemeinsam gebildete Öffnung ist bevorzugt kreisförmig, und die dritte Oberfläche bildet ein Kreissegment mit 60-80% der Kreisformfläche der Öffnung, und die vierte Oberfläche bildet ein Kreissegment mit 20-40% der Kreisformfläche der Öffnung, mit der Maßgabe, dass die gesamte Kreisformfläche der Öffnung 100% beträgt. Diese vorteilhafte Ausgestaltung der dritten und vierten Oberflächen ermöglicht es, dass in der ersten Halbform ein größerer Teil des Querschnitts des Hakenfußes gebildet werden kann, während die zweite Halbform einen kleineren Teil des Querschnitts des Hakenfußes bildet.

Die nachfolgend erläuterten Dimensionierungen der Hakenform sind so gewählt, dass ein spritzgegossener Haken leicht aus den ersten bzw. zweiten Halbformen entform- bzw. entfernbar ist, ohne beschädigt zu werden, z.B. durch Abreißen des Hakenkopfes. Ferner wird durch die nachfolgend erläuterten Dimensionierungen der Hakenform beim Spritzgießen ein Haken erhalten, welcher eine vorteilhaft stabile Klettverschlussverbindung mit einem Flauschteil gewährleistet.

Die erste und zweite Halbform, insbesondere der erste Hohlraum der ersten Halbform und der zweite Hohlraum der zweiten Halbform, sind bevorzugt so dimensioniert, dass der kreisförmige Querschnitt des Hakenfußes einen Durchmesser von 0,3 bis 0,8 mm aufweist, weiter bevorzugt 0,4 bis 0,7 mm, besonders bevorzugt 0,45 bis 0,6 mm.

Des Weiteren ist es bevorzugt, dass die erste und zweite Halbform so dimensioniert sind, dass der Hakenkopf einen Durchmesser gleich oder größer als der Durchmesser des Hakenfußes aufweist, bevorzugt weist der Hakenkopf bis zu 25% mehr Durchmesser auf als der Hakenfuß, bevorzugt von 4% bis zu 22% mehr, noch weiter bevorzugt von 6 bis zu 18% mehr, besonders bevorzugt von 8 bis zu 12% mehr. Falls der Hakenkopf keinen kreisförmigen Querschnitt aufweist, sondern einen kreissegmentförmigen, so ist der Durchmesser des kreissegmentförmigen Querschnitts des Hakenkopfes so gewählt, dass der/die kreissegmentförmige Querschnitt bzw. Querschnittsfläche des Hakenkopfes mindestens gleich oder bevorzugt größer als der/die kreisförmige Querschnitt bzw. Querschnittsfläche des Hakenfußes ist.

Darüber hinaus ist es bevorzugt, dass die erste und zweite Halbform so dimensioniert sind, dass die Hakenform vom Hakenfuß bis zum Hakenkopf eine Höhe von 1,2 bis 4 mm aufweist, weiter bevorzugt 1,5 bis 3 mm, besonders bevorzugt 1,8 bis 2,5 mm. Diese Höhe vom Hakenfuß bis zum Hakenkopf wird senkrecht von den dritten und vierten Oberflächen bis zum höchsten Punkt des Hakenkopfes der Hakenform gemessen.

Der weitere Hohlraum in Form einer Grundplatte des Hakenklettverschluss-Verbindungsteils ist vorzugsweise kreisförmig und weist einen Durchmesser von 5 bis 10 cm und eine Dicke von 1 bis 5 mm auf, weiter bevorzugt einen Durchmesser von 6 bis 8,5 cm und eine Dicke von 1,5 bis 4 mm, besonders bevorzugt einen Durchmesser von 6 bis 7,5 cm und eine Dicke von 2 bis 3 mm. Die hier angegebene Dicke der kreisförmigen Grundplatte versteht sich ohne das optionale Befestigungsmittel, welches sich auf der die Vielzahl von Haken aufweisenden Seite gegenüberliegenden Seite befinden kann.

Es ist bevorzugt, dass das Hakenklettverschluss-Verbindungsteil eine Befestigungsvorrichtung für eine Kraftfahrzeug-Fußmatte ist. Bevorzugte Ausgestaltungen einer Befestigungsvorrichtung für eine Kraftfahrzeug-Fußmatte werden in der Beschreibung des erfindungsgemäßen Hakenklettverschluss-Verbindungsteils erläutert.

Gemäß einer besonders bevorzugten Ausführungsform wird eine Vorrichtung zur Herstellung eines Hakenklettverschluss-Verbindungsteils mittels eines Spritzgießverfahrens bereitgestellt, welche Folgendes umfasst:
Eine Spritzgussform mit einer Vielzahl von ersten und zweiten Halbformen, wobei jede erste Halbform eine Vielzahl von ersten Hohlräumen in einer ersten Oberfläche und jede zweite Halbform eine Vielzahl von zweiten Hohlräumen in einer zweiten Oberfläche aufweist, und erste und zweite Oberflächen sich gegenüberliegen und kontaktieren, so dass der erste und zweite Hohlraum gemeinsam einen Gesamthohlraum in Hakenform bilden,
wobei die Hakenform einen Hakenfuß und einen Hakenkopf aufweist, und Hakenfuß und Hakenkopf innerhalb einer Ebene angeordnet sind, wobei der Hakenfuß durch den ersten und zweiten Hohlraum gebildet wird und der Hakenkopf durch den zweiten Hohlraum gebildet wird,
wobei die Spritzgussform eine Längsachse aufweist, entlang der die zweiten Halbformen gegenüber den ersten Halbformen verschiebbar sind,
wobei die ersten und zweiten Oberflächen der Vielzahl von ersten und zweiten Halbformen parallel zueinander und parallel zur Längsachse angeordnet sind,
dadurch gekennzeichnet, dass die Ebene und die Längsachse zueinander angewinkelt sind in einem Winkel α von 5° bis 30°, bevorzugt 10° bis 20°,
bevorzugt ist der zweite Hohlraum so dimensioniert, dass der Hakenkopf einen Querschnitt gleich oder größer als der Querschnitt des Hakenfußes aufweist, und
bevorzugt sind die ersten und zweiten Halbformen kreisförmig konzentrisch zueinander angeordnet. Die vorgenannten besonders bevorzugte Ausführungsform der erfindungsgemäßen Vorrichtung umfasst ferner optional:

Die erste Halbform weist eine dritte Oberfläche und die zweite Halbform eine vierte Oberfläche auf, und die dritte Oberfläche grenzt an die erste Oberfläche an, und die vierte Oberfläche grenzt an die zweite Oberfläche an, wobei die dritte und vierte Oberfläche gemeinsam eine Öffnung bilden, die den Querschnitt des unteren Endes des Hakenfußes darstellt, wobei diese Öffnung in einen weiteren Hohlraum in Form einer Grundplatte des Hakenklettverschluss-Verbindungsteils mündet, so dass beim Ausspritzen der Spritzgussform ein Hakenklettverschluss-Verbindungsteil mit einer Vielzahl von auf der Grundplatte gebildeten Haken erhalten wird,
wobei die dritte Oberfläche rechtwinklig zur ersten Oberfläche ist und die vierte Oberfläche rechtwinklig zur zweiten Oberfläche ist, und die dritten und vierten Oberflächen planar sind.

Des Weiteren betrifft die Erfindung ein Spritzgussverfahren zum Herstellen eines Hakenklettverschluss-Verbindungsteils unter Verwendung der erfindungsgemäßen Vorrichtung. Die Vorteile dieses Spritzgussverfahrens ergeben sich aus den bereits oben erläuterten Vorteilen der Vorrichtung.

Das erfindungsgemäße Spritzgussverfahren unterscheidet sich hinsichtlich Verfahrensparametern wie der Temperatur(en) zum Schmelzen eines Ausgangskunststoffs und Spritzgießen in die Spritzgießform sowie hinsichtlich der Wahl des Kunststoffs nicht von herkömmlichen Spritzgussverfahren. Beispielsweise kann als Ausgangskunststoff ein Kunststoff ausgewählt werden aus der Gruppe der Polyamide, Polyalkylene und thermoplastischer Copolymere, bevorzugt ist der Kunststoff aus der Gruppe Polyamid, Polyethylen, Polypropylen und Acrylnitrilbutadienstyrol (ABS) ausgewählt, weiter bevorzugt Polyamid oder Polyethylene, besonders bevorzugt Polyamid 56. Die Verfahrenstemperatur(en) werden abhängig von der Art des verwendeten Kunststoffs gewählt.

In dem erfindungsgemäßen Spritzgussverfahren wird das Hakenklettverschluss-Verbindungsteil in der Spritzgussform vorzugsweise in einem Stück geformt. Das heißt, das Hakenklettverschluss-Verbindungsteil kann in einem Schritt gebildet werden. Dies hat den Vorteil, dass es keiner weiteren Schritte bedarf, um die Vielzahl von Haken auf einem Grundkörper, z.B. in Form einer Grundplatte, anzubringen, und/oder optionale Befestigungsmittel an dem Grundkörper anzubringen.

Bevorzugt umfasst das erfindungsgemäße Verfahren die folgenden Schritte:
a) Einspritzen von geschmolzenem Kunststoff in die Spritzgussform;
b) Abkühlen des geschmolzenen Kunststoffs in der Spritzgussform, bis der Kunststoff fest ist;
c) Verschieben der zweiten Halbformen entlang der Längsrichtung der Spritzgussform in Richtung einer Grundplatte des Hakenklettverschluss-Verbindungsteils, auf der die Haken gebildet sind, um die Hakenfüße aus den ersten Halbformen zu entformen.

Die im erfindungsgemäßen Verfahren verwendete erfindungsgemäße Vorrichtung weist eine Spritzgussform mit ersten und zweiten Halbformen auf, die so gebildet sind, dass die Ebene, innerhalb der der Hakenfuß und der Hakenkopf der Hakenform angeordnet sind, und die Längsachse der Spritzgussform zueinander angewinkelt sind. Dies erleichtert den Entformungs- bzw. Auswerfschritt c), denn so können durch den mittels des durch das Verschieben der zweiten Halbformen ausgeübte Druck auf den Hakenkopf die Hakenfüße leicht aus der Spritzgussform gedrückt bzw. entformt werden. Je nach Ausgestaltung der Spritzgussform kann zwischen Schritt b) und c) die Spritzgussform in Richtung des weiteren Hohlraums in Form einer Grundplatte geöffnet werden, um das Verschieben der zweiten Halbformen in Richtung der Grundplatte des spritzgegossenen Hakenklettverschluss-Verbindungsteils zu ermöglichen. Alternativ kann die Vorrichtung bzw. die Spritzgussform einen Mechanismus aufweisen, der ein Verschieben der zweiten Halbformen in Schritt c) erlaubt, ohne dass die Spritzgussform vor Schritt c) geöffnet werden muss, z.B. ein Mechanismus, welcher durch Verschieben der zweiten Halbformen ein Öffnen der Spritzgussform in Richtung des weiteren Hohlraums in Form der Grundplatte ermöglicht, indem die zweiten Halbformen Druck auf die spritzgegossene Grundplatte ausüben, und die Spritzgussform sich so, z.B. mittels eines federnden Mechanismus, öffnet.

Ferner umfasst das erfindungsgemäße Verfahren vorzugweise folgenden Schritt:
d) Ziehen an der Grundplatte des Hakenklettverschluss-Verbindungsteils, um in den zweiten Halbformen befindliche Hakenköpfe herauszuziehen.

Während mittels Schritt c) die Hakenfüße herausgedrückt bzw. entformt werden, dient Schritt d) der Entformung der Hakenköpfe. Das Ziehen an der Grundplatte des Hakenklettverschluss-Verbindungsteils in Schritt d) kann mittels jedem beliebigen, dafür geeignete Mittel bewerkstelligt werden. Der entscheidende Vorteil bei Schritt d) ist, dass dank der Spritzgussform mit ersten und zweiten Halbformen, die so gebildet sind, dass die Ebene, innerhalb der der Hakenfuß und der Hakenkopf der Hakenform angeordnet sind, und die Längsachse der Spritzgussform zueinander angewinkelt sind, sich die Hakenköpfe leicht aus den zweiten Halbformen herausziehen lassen, ohne dabei beschädigt zu werden.

Des Weiteren betrifft die Erfindung ein Hakenklettverschluss-Verbindungsteil mit einer Vielzahl von Haken, welche auf einer Grundplatte angeordnet sind, wobei die Haken einen Hakenfuß und einen Hakenkopf aufweisen, und Hakenfuß und einen Hakenkopf innerhalb einer Ebene angeordnet sind, dadurch gekennzeichnet, dass die Ebene und die Grundplatte in einem Winkel β größer 90° zueinander angewinkelt sind. Herkömmliche Hakenklettverschluss-Verbindungsteile weisen Kletthaken auf, die aufgrund ihres Herstellungsverfahrens in einem Winkel von 90° auf einem Grundkörper gebildet sind. Die vorliegenden Erfinder haben nun überraschend gefunden, dass ein Winkel von größer 90° nicht nur Vorteile im Hinblick auf die Vorrichtung zur Herstellung und das Spritzgießverfahren bietet, sondern dass mit einem Winkel größer 90° auch eine vorteilhafte, besonders stabile Klettverschlussverbindung mit einem Flauschteil gewährleistet wird.

Das Hakenklettverschluss-Verbindungsteil ist vorzugsweise durch das oben beschriebene erfindungsgemäße Verfahren erhältlich. Dadurch lässt sich das Hakenklettverschluss-Verbindungsteil mit den bereits genannten Vorteilen, welche im Zusammenhang mit der erfindungsgemäßen Vorrichtung und dem erfindungsgemäßen Verfahren genannt wurden, herstellen.

Der Winkel β zwischen der imaginären Ebene, innerhalb welcher Hakenfuß und Hakenkopf angeordnet sind, und Grundplatte des erfindungsgemäßen Hakenklettverschluss-Verbindungsteils korrespondiert mit dem Winkel α zwischen Ebene und Längsachse der Spritzgussform der erfindungsgemäßen Vorrichtung, wenn das erfindungsgemäße Hakenklettverschluss-Verbindungsteil mit dem erfindungsgemäßen Verfahren hergestellt wird. Beispielsweise ist der Winkel β gleich Winkel α plus 90°, wenn bei der ersten Halbform die dritte Oberfläche rechtwinklig zur ersten Oberfläche ist und bei der zweiten Halbform die vierte Oberfläche rechtwinklig zur zweiten Oberfläche ist, d.h. bei einem Winkel α = 15° ist dann der Winkel β = 15° + 90° = 105°. Somit lässt sich am erfindungsgemäßen Hakenklettverschluss-Verbindungsteil durch die Anwinkelung mit Winkel β von größer als 90° erkennen, dass es mit dem erfindungsgemäßen Verfahren bzw. der erfindungsgemäßen Vorrichtung hergestellt wurde.

Es ist bevorzugt, dass in dem erfindungsgemäßen Hakenklettverschluss-Verbindungsteil die Ebene und die Grundplatte in einem Winkel β von größer 90° bis 130° zueinander angewinkelt sind, weiter bevorzugt 95° bis 120°, und besonders bevorzugt 100° bis 110°. Es wurde überraschend gefunden, dass ein Winkel β von 95° bis 120°, und besonders ein Winkel von 100° bis 110°, besonders vorteilhaft ist hinsichtlich der Stabilität der Klettverschlussverbindung mit einem Flauschteil. Die im Zusammenhang mit der angewinkelten Anordnung von der Ebene und der Grundplatte zueinander angegebenen Winkel schließen auch negative Winkel ein, das heißt Winkel die mehr als -90° bis -130° zueinander angewinkelt, bevorzugt mehr als -95° bis -120°, und besonders bevorzugt mehr als -100° bis -110°. Somit kann die Vielzahl von auf der Grundplatte angeordneten Haken auch gegenläufig gebildet werden, also einmal mit positivem Winkel und einmal mit negativem Winkel.

Das erfindungsgemäße Hakenklettverschluss-Verbindungsteil ist prinzipiell für jede Anwendung wie z.B. im Freizeitbereich, im Haushalt oder im industriellen Bereich, z.B. im Automobilbereich, geeignet. Dafür kann das Hakenklettverschluss-Verbindungsteil jedwede für die gewünschte Anwendung geeignete Form aufweisen, insbesondere wird die Hakenform und Haken-Dimensionierung sowie die Form der Grundplatte entsprechend geeignet gewählt, und auch optional an der Grundplatte angebrachte Befestigungsmittel können je nach Anwendungsgebiet geeignet gewählt werden.

In dem erfindungsgemäßen Hakenklettverschluss-Verbindungsteil kann die Vielzahl der Haken kreisförmig konzentrisch auf der Grundplatte angeordnet sein, bevorzugt kreisförmig konzentrisch gegeneinander.

Das erfindungsgemäße Hakenklettverschluss-Verbindungsteil ist vorzugsweise eine Befestigungsvorrichtung für eine Kraftfahrzeug-Fußmatte, deren bevorzugte Ausgestaltung nachfolgend erläutert wird.

Das Hakenklettverschluss-Verbindungsteil ist vorzugsweise eine Befestigungsvorrichtung für eine Kraftfahrzeug-Fußmatte, welche bevorzugt auf der Seite der Grundplatte, welche der Seite mit der Vielzahl von Haken gegenüberliegt, ein Befestigungsmittel zur Befestigung der Grundplatte am Boden des Innenraums eines Kraftfahrzeugs aufweist, wobei die Grundplatte, die Vielzahl von Haken und das Befestigungsmittel einstückig gebildet sind. Die einstückige Bildung des Hakenklettverschluss-Verbindungsteils hat den Vorteil, dass die Vielzahl der Haken als auch das Befestigungsmittel fester Bestandteil des Hakenklettverschluss-Verbindungsteils sind, wodurch sowohl die Klettverbindung zu einem Flauschteil auch die Befestigung am Boden des Innenraums eines Kraftfahrzeugs wesentlich stabiler ist als bei einem Hakenklettverschluss-Verbindungsteil, bei welchem die Vielzahl der Haken und/oder das Befestigungsmittel separate Teile sind, die nachträglich an der Grundplatte angebracht werden.

Das Befestigungsmittel kann prinzipiell jede Form aufweisen, solange es zur Befestigung der Grundplatte am Boden des Innenraums eines Kraftfahrzeugs geeignet ist. Bevorzugt ist das Befestigungsmittel in Form einer Schraube oder eines T-förmigen Verankerungselements.

Die Dimensionen von Haken, Grundplatte und optionalem Befestigungsmittel des erfindungsgemäßen Hakenklettverschluss-Verbindungsteils können je nach Anwendungsgebiet geeignet gewählt werden.

Das Hakenklettverschluss-Verbindungsteil weist vorzugsweise Haken mit einem Hakenfuß mit kreisförmigem Querschnitt mit einem Durchmesser von 0,3 bis 0,8 mm auf, weiter bevorzugt 0,4 bis 0,7 mm, besonders bevorzugt 0,45 bis 0,6 mm. Ferner ist der Hakenkopf des Hakens des Hakenklettverschluss-Verbindungsteils vorzugsweise so ausgestaltet, dass der Hakenkopf einen Durchmesser gleich oder größer als der Durchmesser des Hakenfußes aufweist, bevorzugt weist der Hakenkopf bis zu 25% mehr Durchmesser auf als der Hakenfuß, bevorzugt von 4% bis zu 22% mehr, noch weiter bevorzugt von 6 bis zu 18% mehr, besonders bevorzugt von 8 bis zu 12% mehr. Falls der Hakenkopf keinen kreisförmigen Querschnitt aufweist, sondern einen kreissegmentförmigen, so ist der Durchmesser des kreissegmentförmigen Querschnitts des Hakenkopfes so gewählt, dass der/die kreissegmentförmige Querschnitt bzw. Querschnittsfläche des Hakenkopfes mindestens gleich oder bevorzugt größer als der/die kreisförmige Querschnitt bzw. Querschnittsfläche des Hakenfußes ist. Diese Dimensionierungen von Hakenfuß und/oder Hakenkopf tragen zu einer stabilen Klettverschlussverbindung mit einem Flauschteil bei. Insbesondere die Dimensionierung des Hakenkopfes mit einem gleichen oder größeren Durchmesser bzw. Querschnitt als der Hakenfuß trägt zu einer besonders stabilen Klettverschlussverbindung mit einem Flauschteil bei. Denn wenn man versucht, eine Klettverschlussverbindung mit einem Flauschteil zu lösen, so benötigt Hakenkopf eine höhere Abzugskraft, unter anderem weil der Hakenkopf aufgrund der vorteilhaften Dimensionierung stabiler ist und viel weniger leicht abreist vom Hakenfuß wie ein Hakenkopf, welcher einen geringeren Durchmesser als der Hakenfuß aufweist.

Die Haken des Hakenklettverschluss-Verbindungsteils weisen bevorzugt eine Höhe vom Hakenfuß bis zum Hakenkopf von 1,2 bis 4 mm auf, bevorzugt 1,5 bis 3 mm, besonders bevorzugt 1,8 bis 2,5 mm. Diese Höhe vom Hakenfuß bis zum Hakenkopf wird senkrecht von der Grundplatte zum höchsten Punkt des Hakenkopfes gemessen.

Es ist bevorzugt, dass die Grundplatte des Hakenklettverschluss-Verbindungsteils kreisförmig ist und einen Durchmesser von 5 bis 10 cm und eine Dicke von 1 bis 5 mm aufweist, bevorzugt einen Durchmesser von 6 bis 8,5 cm und eine Dicke von 1,5 bis 4 mm, besonders bevorzugt einen Durchmesser von 6 bis 7,5 cm und eine Dicke von 2 bis 3 mm. Die vorgenannte Dicke der Grundplatte betrifft ausschließlich die Grundplatte selbst, das heißt die darauf angeordnete Vielzahl von Haken und auch das optionale Befestigungsmittel sind in dieser Höhe nicht berücksichtigt. Diese bevorzugte Dimensionierung der Grundplatte gewährleistet eine vorteilhafte Stabilität der Grundplatte, insbesondere für den Anwendungszweck als Befestigungsvorrichtung für eine Kraftfahrzeug-Fußmatte.

Es ist bevorzugt, dass das Befestigungsmittel eine ab der Grundplatte gemessene Länge von 0,4 bis 3 cm aufweist, weiter bevorzugt 0,8 bis 2,4 cm, besonders bevorzugt 1,2 bis 1,8 cm. Dadurch wird eine vorteilhaft stabile Befestigung des erfindungsgemäßen Hakenklettverschluss-Verbindungsteils gewährleistet, z.B. am Boden des Innenraums eines Kraftfahrzeugs.

Der Hakenkopf ist vorzugsweise als Doppelhakenkopf ausgebildet, dessen Hakenköpfe in 180° entgegengesetzte Richtungen zeigen. Dies hat den Vorteil, dass die Stabilität der Klettverbindung im Vergleich zu Haken mit nur einem Hakenkopf quasi verdoppelt wird.

Gemäß einer besonders bevorzugten Ausführungsform wird ein Hakenklettverschluss-Verbindungsteil mit einer Vielzahl von Haken bereitgestellt, welche auf einer Grundplatte angeordnet sind, wobei die Haken einen Hakenfuß und einen Hakenkopf aufweisen, und Hakenfuß und Hakenkopf innerhalb einer Ebene angeordnet sind, dadurch gekennzeichnet, dass die Ebene und die Grundplatte in einem Winkel β von 95° bis 120°, bevorzugt 100° bis 110°, zueinander angewinkelt sind; bevorzugt weist der Haken einen Hakenkopf auf, welcher einen Durchmesser gleich oder größer als der Durchmesser des Hakenfußes aufweist, und bevorzugt ist die Vielzahl der Haken kreisförmig konzentrisch auf der Grundplatte angeordnet. Die Erfindung wird im Folgenden anhand eines Ausführungsbeispiels unter Bezugnahme auf die beigefügten, schematischen Zeichnungen näher erläutert. Darin zeigen:
- Figur 1:: eine Draufsicht von schräg oben auf die Vielzahl der ersten und zweiten Halbformen der erfindungsgemäßen Vorrichtung, wobei hier die ersten und zweiten Halbformen entlang der Längsachse der Spritzgussform gegeneinander verschoben sind;
- Figur 2:: eine halbe Querschnittsansicht der Spritzgussform der erfindungsgemäßen Vorrichtung, wobei sich hier im Unterschied zu Figur 1 die ersten und zweiten Oberflächen so gegenüberliegen und kontaktieren, dass der erste und zweite Hohlraum gemeinsam einen Gesamthohlraum in Hakenform bilden. Die gestrichelte Linie markiert, wo der Querschnitt der Spritzgussform halbiert wurde - spiegelt man die halbe Querschnittsansicht gegenüber der gestrichelten Linie, erhält man die volle Querschnittsansicht der Spritzgussform;
- Figur 3:: ist eine Detailansicht des in Figur 2 gezeigten, eingekreisten Abschnitts A;
- Figur 4:: zeigt Seitenansichten von schematischen Hakenformen;
- Figur 5: zeigt zwei Seitenansichten eines besonders bevorzugten Hakens, der durch einen gemeinsam durch ersten und zweiten Hohlraum gemeinsam gebildeten Gesamthohlraum in Hakenform gebildet wird;
- Figur 6:: eine Seitenansicht eines bevorzugten Hakens mit Doppelhakenkopf;
- Figur 7:: eine Draufsicht von schräg oben auf den Klettteller eines bevorzugten Hakenklettverschluss-Verbindungsteils; und
- Figur 8:: eine Draufsicht von schräg oben auf den unteren Teil des bevorzugten Hakenklettverschluss-Verbindungsteils.

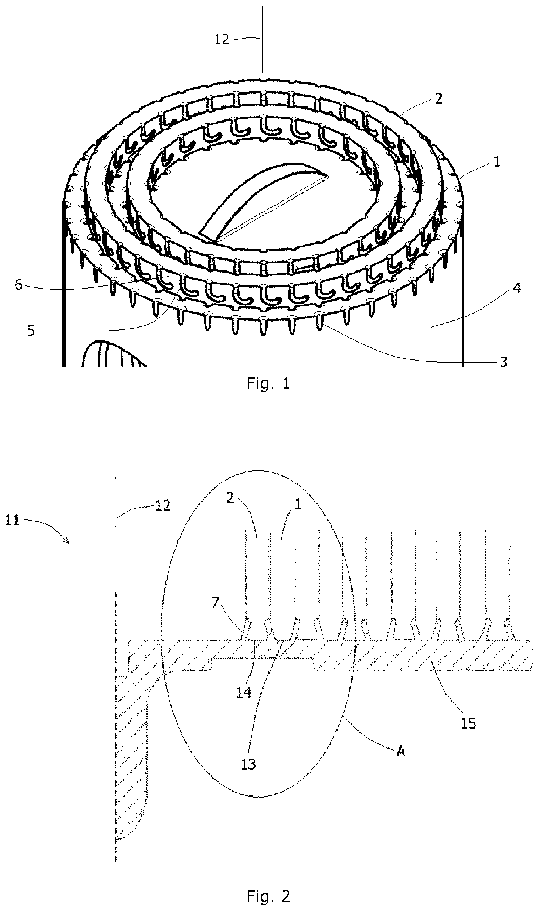

Figur 1 zeigt eine bevorzugte Ausführungsform der erfindungsgemäßen Vorrichtung, welche einer Vielzahl von ersten Halbformen 1 und zweiten Halbformen 2 zeigt, welche kreisförmig konzentrisch zueinander angeordnet sind. Die zweiten Halbformen 2 sind hier gegenüber den ersten Halbformen entlang der Längsachse 12 der Spritzgussform 11 verschoben, d.h. in Entformungs- bzw. Auswerfposition. Zur Herstellung des Hakenklettverschluss-Verbindungsteils sind die ersten Halbformen 1 und zweiten Halbformen 2 so angeordnet (nicht in Figur 1 gezeigt), dass die Vielzahl von ersten Hohlräumen 3 in einer ersten Oberfläche 4 der ersten Halbform 1 und die Vielzahl von zweiten Hohlräumen 5 in einer zweiten Oberfläche 6 der zweiten Halbform 2 sich gegenüberliegen und kontaktieren, so dass der erste Hohlraum 3 und zweite Hohlraum 5 gemeinsam einen Gesamthohlraum in Hakenform 7 bilden. Der Hakenfuß 8 wird hier durch den ersten Hohlraum 3 und zweiten Hohlraum 5 gebildet, und der Hakenkopf 9 wird durch den zweiten Hohlraum 5 gebildet wird.

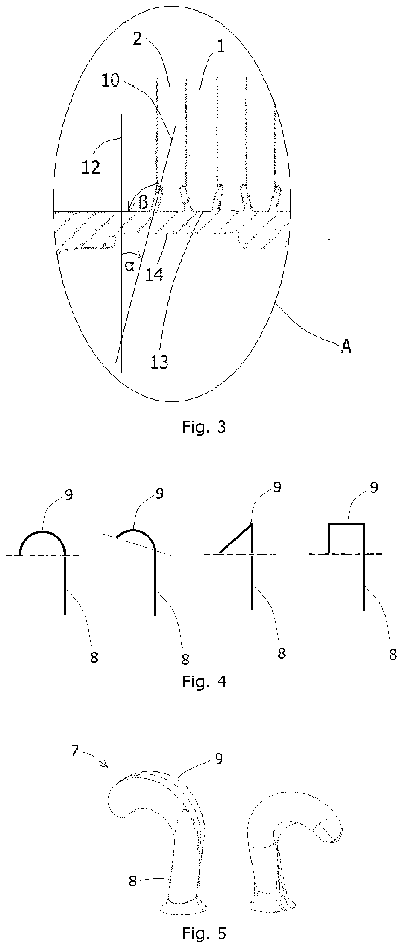

Aus den Figuren 2 und 3 ist ersichtlich, wie die (imaginäre) Ebene 10, innerhalb der Hakenfuß 8 und Hakenkopf 9 angeordnet sind, und die Längsachse 12 der Spritzgussform 11 angewinkelt zueinander angeordnet sind, in diesem Beispielfall in einem Winkel α von 15°. In Figur 3 ist die Ebene 10 als einfache Linie dargestellt, da hier seitlich auf die Ebene 10 geblickt wird. In der hier gezeigten Vorrichtung weist die erste Halbform 1 eine dritte Oberfläche 13 und die zweite Halbform 2 eine vierte Oberfläche 14 auf, und die dritte Oberfläche 13 grenzt an die erste Oberfläche 4 an und die vierte Oberfläche 14 grenzt an die zweite Oberfläche 6 an. Die dritte Oberfläche 13 und vierte Oberfläche 14 bilden gemeinsam eine Öffnung, die den Querschnitt des unteren Endes des Hakenfußes 8 darstellt. Diese Öffnung mündet in einen weiteren Hohlraum 15 in Form einer Grundplatte 16 des Hakenklettverschluss-Verbindungsteils, so dass beim Ausspritzen der Spritzgussform ein Hakenklettverschluss-Verbindungsteil mit einer Vielzahl von auf der Grundplatte gebildeten Haken erhalten wird. Der hier gezeigte weitere Hohlraum 15 in Form einer Grundplatte 16 der Hakenklettverschluss-Verbindungsteils ist des Weiteren mit einem Hohlraum in Form eines Befestigungsmittels 19 ausgestaltet. Durch die Anwinkelung von Ebene 10 und Längsachse 12 zueinander werden beim Spritzgießen Haken 7 auf der Grundplatte 16 mit einem Winkel β bereitgestellt. Da im vorliegenden Beispiel die dritte Oberfläche 13 rechtwinklig zur ersten Oberfläche 4 ist und die vierte Oberfläche 14 rechtwinklig zur zweiten Oberfläche 6 ist, ist hier der Winkel β gleich Winkel α plus 90°, also ist Winkel β = 105°.

Figur 4 zeigt Seitenansichten von schematischen Hakenformen, und zwar von links nach rechts: Hakenformen 7 mit Hakenköpfen 9 in halbkreisförmiger Form, 2/3 halbkreisförmiger Form, angewinkelt in umgekehrter V-Form und in eckiger, umgekehrter U-Form. Die gestrichelte Linie zeigt die schematische Trennung zwischen Hakenkopf 9 und Hakenfuß 8. Bei halbkreisförmigen oder kreisförmigen Formen beginnt der Hakenkopf 9 (und endet der Hakenfuß 8) mit der kreisförmigen Krümmung des Hakenkopfes. Bei der umgekehrten V-Form und eckigen U-Form endet der Hakenfuß 8 und beginnt der Hakenkopf 9 an dem Punkt, wo die gestrichelte Linie, welche vom Ende des Hakenkopfes ausgeht, den Hakenfuß als Senkrechte schneidet. Allerdings ist die hier gezeigte Trennung zwischen Hakenkopf und Hakenfuß rein schematisch. Denn bei einer dreidimensionalen Ausgestaltung kann ein Teil des Hakenfußes den in Figur 4 gezeigten Trennpunkt entlang der Längsrichtung des Hakenfußes höhenmäßig unter- oder überschreiten.

Figur 5 zeigt eine(n) bevorzugte(n) Haken(-form) 7 mit einem Hakenfuß 8 und einem Hakenkopf 9, und zwar zwei Seitenansichten der Haken(form) 7. Hier weist der Hakenfuß 8 einen kreisförmigen Querschnitt auf, und der Hakenkopf 9 weist einen im Wesentlichen kreisförmigen Querschnitt in Form eines Kreissegments auf. Bei der linken Hakenform ist ersichtlich, dass ein durch die erste Halbform gebildeter Teil des Hakenfußes 8 über den Punkt hinausgeht, an welchem die Krümmung des Hakenkopfs 9 beginnt.

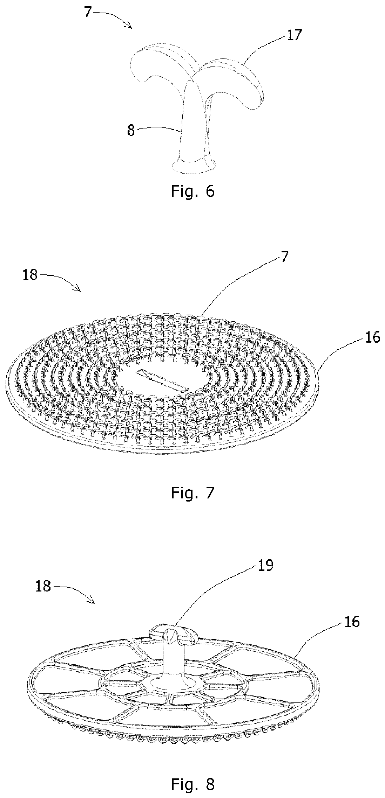

Figur 6 zeigt beispielhaft eine(n) Haken(form) 7 mit Doppelhakenkopf 17.

Figur 7 zeigt eine bevorzugte Ausführungsform des Hakenklettverschluss-Verbindungsteils 18 in Form einer Befestigungsvorrichtung für eine Kraftfahrzeug-Fußmatte, und zwar deren Oberseite, die eine Vielzahl von Haken 7 auf der Grundplatte 16 aufweist. Hier sind die Haken 7 kreisförmig konzentrisch angeordnet, wobei die Orientierung der Hakenkopfformen von einem konzentrischen Ring von Haken 7 zum benachbarten konzentrischen Ring von Haken 7 entgegengesetzt ist, d.h. die Haken sind kreisförmig gegeneinander angeordnet.

Figur 8 zeigt die Unterseite des in Figur 7 gezeigten Hakenklettverschluss-Verbindungsteils 18, welche ein Befestigungsmittel 19 in T-förmigen Verankerungselements aufweist.

Die bevorzugten Aspekte der vorliegenden Offenbarung können wie folgt zusammengefasst werden:
1. Vorrichtung zur Herstellung eines Hakenklettverschluss-Verbindungsteils mittels eines Spritzgießverfahrens, umfassend:
   eine Spritzgussform mit einer Vielzahl von ersten und zweiten Halbformen, wobei jede erste Halbform eine Vielzahl von ersten Hohlräumen in einer ersten Oberfläche und jede zweite Halbform eine Vielzahl von zweiten Hohlräumen in einer zweiten Oberfläche aufweist, und erste und zweite Oberflächen sich gegenüberliegen und kontaktieren, so dass der erste und zweite Hohlraum gemeinsam einen Gesamthohlraum in Hakenform bilden,
   wobei die Hakenform einen Hakenfuß und einen Hakenkopf aufweist, und Hakenfuß und Hakenkopf innerhalb einer Ebene angeordnet sind, wobei der Hakenfuß mindestens durch den ersten Hohlraum gebildet wird und der Hakenkopf mindestens durch den zweiten Hohlraum gebildet wird,
   wobei die Spritzgussform eine Längsachse aufweist, entlang der die zweiten Halbformen gegenüber den ersten Halbformen verschiebbar sind,
   dadurch gekennzeichnet, dass die Ebene und die Längsachse zueinander angewinkelt sind.
2. Vorrichtung gemäß Aspekt 1, welche mindestens eines der folgenden Merkmale aufweist:
   - die Ebene und die Längsachse sind mit einem Winkel (a) von bis zu 40°, bevorzugt 5° bis 30°, besonders bevorzugt 10° bis 20°, zueinander angewinkelt;
   - die ersten und zweiten Oberflächen der Vielzahl von ersten und zweiten Halbformen sind parallel zueinander angeordnet, bevorzugt parallel zur Längsachse;
   - der Hakenfuß wird durch den ersten und zweiten Hohlraum gebildet und der Hakenkopf wird durch den zweiten Hohlraum gebildet;
   - der zweite Hohlraum ist so dimensioniert, dass der Hakenkopf einen Querschnitt gleich oder größer als der Querschnitt des Hakenfußes aufweist;
   - mindestens eine erste Halbform auf zwei sich gegenüberliegenden Seiten weist jeweils eine erste Oberfläche auf, und mindestens eine zweite Halbform auf zwei sich gegenüberliegenden Seiten weist jeweils eine zweite Oberfläche auf;
   - die zweite Halbform ist so gebildet, dass der Hakenkopf als Doppelhakenkopf, dessen Hakenköpfe in 180° entgegengesetzte Richtungen zeigen, geformt wird;
   - der Querschnitt von Hakenfuß und/oder Hakenkopf ist im Wesentlichen kreisförmig.
3. Vorrichtung gemäß Aspekt 1 oder 2,
   wobei die erste Halbform eine dritte Oberfläche und die zweite Halbform eine vierte Oberfläche aufweisen, und
   die dritte Oberfläche an die erste Oberfläche angrenzt und die vierte Oberfläche an die zweite Oberfläche angrenzt,
   wobei die dritte und vierte Oberfläche gemeinsam eine Öffnung bilden, die den Querschnitt des unteren Endes des Hakenfußes darstellt;
   bevorzugt mündet diese Öffnung in einen weiteren Hohlraum in Form einer Grundplatte des Hakenklettverschluss-Verbindungsteils, so dass beim Ausspritzen der Spritzgussform ein Hakenklettverschluss-Verbindungsteil mit einer Vielzahl von auf der Grundplatte gebildeten Haken erhalten wird.
4. Vorrichtung gemäß Aspekt 3, welche mindestens eines der folgenden Merkmale aufweist:
   - die dritte Oberfläche ist rechtwinklig zur ersten Oberfläche und die vierte Oberfläche ist rechtwinklig zur zweiten Oberfläche;
   - die zweiten Halbformen sind in Richtung des weiteren Hohlraums in Form einer Grundplatte des Hakenklettverschluss-Verbindungsteils verschiebbar, während die ersten Halbformen ihre Position beibehalten;
   - die dritten und vierten Oberflächen sind planar.
5. Vorrichtung gemäß einem der vorhergehenden Aspekte,
   wobei die ersten und zweiten Oberflächen planar und die zweiten Hohlräume bevorzugt so gebildet sind, dass die Enden der Hakenkopfformen jeweils die gleiche Orientierung aufweisen.
6. Vorrichtung gemäß einem der Aspekte 1 bis 4,
   wobei die ersten und zweiten Halbformen konzentrisch zueinander angeordnet sind.
7. Vorrichtung gemäß Aspekt 6,
   wobei die ersten und zweiten Halbformen kreisförmig konzentrisch zueinander angeordnet und alle zweiten Hohlräume bevorzugt so gebildet sind, dass alle Hakenkopfformen im Wesentlichen tangential zur Kreisform der zweiten Halbform gebildet sind und die Enden der Hakenkopfformen jeweils die gleiche Orientierung aufweisen.
8. Vorrichtung gemäß einem der Aspekte 3 bis 7,
   wobei die Öffnung kreisförmig ist, und die dritte Oberfläche ein Kreissegment mit 60-80% der Kreisformfläche der Öffnung bildet, und die vierte Oberfläche ein Kreissegment mit 20-40% der Kreisformfläche der Öffnung bildet, mit der Maßgabe, dass die gesamte Kreisformfläche der Öffnung 100% beträgt; und/oder
   die erste und zweite Halbform so dimensioniert sind, dass der Hakenkopf einen Durchmesser gleich oder größer als der Durchmesser des Hakenfußes aufweist, wobei der Hakenkopf bevorzugt bis zu 25% mehr Durchmesser aufweist, als der Hakenfuß, weiter bevorzugt von 4% bis zu 22% mehr, noch weiter bevorzugt von 6 bis zu 18% mehr, besonders bevorzugt von 8 bis zu 12% mehr.
9. Spritzgussverfahren zum Herstellen eines Hakenklettverschluss-Verbindungsteils unter Verwendung einer Vorrichtung gemäß einem der Aspekte 1 bis 8.
10. Spritzgussverfahren gemäß Aspekt 9,
   wobei das Hakenklettverschluss-Verbindungsteil in der Spritzgussform in einem Stück geformt wird.
11. Spritzgussverfahren gemäß Aspekt 9 oder 10, umfassend die folgenden Schritte a) bis c), und optional den Schritt d):
   a) Einspritzen von geschmolzenem Kunststoff in die Spritzgussform;
   b) Abkühlen des geschmolzenen Kunststoffs in der Spritzgussform, bis der Kunststoff fest ist;
   c) Verschieben der zweiten Halbformen entlang der Längsrichtung der Spritzgussform in Richtung einer Grundplatte des Hakenklettverschluss-Verbindungsteils, auf der die Haken gebildet sind, um die Hakenfüße aus den ersten Halbformen zu entformen;
   d) Ziehen an der Grundplatte des Hakenklettverschluss-Verbindungsteils, um in den zweiten Halbformen befindliche Hakenköpfe herauszuziehen.
12. Hakenklettverschluss-Verbindungsteil mit einer Vielzahl von Haken, welche auf einer Grundplatte angeordnet sind,
   wobei die Haken einen Hakenfuß und einen Hakenkopf aufweisen, und
   Hakenfuß und Hakenkopf innerhalb einer Ebene angeordnet sind,
   dadurch gekennzeichnet, dass die Ebene und die Grundplatte in einem Winkel (β) größer 90° zueinander angewinkelt sind.
13. Hakenklettverschluss-Verbindungsteil gemäß Aspekt 12,
   wobei die Ebene und die Grundplatte in einem Winkel (β) von größer 90° bis 130° zueinander angewinkelt sind, weiter bevorzugt 95° bis 120°, und besonders bevorzugt 100° bis 110°; und/oder
   das Hakenklettverschluss-Verbindungsteil durch das Verfahren gemäß einem der Aspekte 9 bis 11 erhältlich ist.
14. Hakenklettverschluss-Verbindungsteil gemäß Aspekt 12 oder 13,
   wobei das Hakenklettverschluss-Verbindungsteil eine Befestigungsvorrichtung für eine Kraftfahrzeug-Fußmatte ist, welche mindestens eines der folgenden Merkmale aufweist:
   - ein Befestigungsmittel auf der Seite der Grundplatte, welche der Seite mit der Vielzahl von Haken gegenüberliegt, wobei das Befestigungsmittel zur Befestigung der Grundplatte am Boden des Innenraums eines Kraftfahrzeugs dient, und die Grundplatte, die Vielzahl von Haken und das Befestigungsmittel einstückig gebildet sind;
   - ein Befestigungsmittel in Form einer Schraube oder eines T-förmigen Verankerungselements;
   - ein Befestigungsmittel weist eine ab der Grundplatte gemessene Länge von 0,4 bis 3 cm auf, bevorzugt 0,8 bis 2,4 cm, besonders bevorzugt 1,2 bis 1,8 cm.
15. Hakenklettverschluss-Verbindungsteil gemäß einem der Aspekte 12 bis 14, welches mindestens eines der folgenden Merkmale aufweist:
   - die Vielzahl der Haken ist kreisförmig konzentrisch auf der Grundplatte angeordnet;
   - jeder Haken weist einen Hakenfuß mit kreisförmigem Querschnitt mit einem Durchmesser von 0,3 bis 0,8 mm auf, bevorzugt 0,4 bis 0,7 mm, besonders bevorzugt 0,45 bis 0,6 mm;
   - jeder Haken weist einen Hakenkopf auf, welcher einen Durchmesser gleich oder größer als der Durchmesser des Hakenfußes aufweist, bevorzugt bis zu 25% mehr Durchmesser, als der Hakenfuß, weiter bevorzugt von 4% bis zu 22% mehr, noch weiter bevorzugt von 6 bis zu 18% mehr, besonders bevorzugt von 8 bis zu 12% mehr;
   - jeder Haken weist vom Hakenfuß bis zum Hakenkopf eine Höhe von 1,2 bis 4 mm auf, bevorzugt 1,5 bis 3 mm, besonders bevorzugt 1,8 bis 2,5 mm;
   - die Grundplatte des Hakenklettverschluss-Verbindungsteils ist kreisförmig und weist einen Durchmesser von 5 bis 10 cm und eine Dicke von 1 bis 5 mm auf, bevorzugt einen Durchmesser von 6 bis 8,5 cm und eine Dicke von 1,5 bis 4 mm, besonders bevorzugt einen Durchmesser von 6 bis 7,5 cm und eine Dicke von 2 bis 3 mm.

### Bezugszeichenliste

- 1: erste Halbform
- 2: zweite Halbform
- 3: erster Hohlraum
- 4: erste Oberfläche der ersten Halbform
- 5: zweiter Hohlraum
- 6: zweite Oberfläche der zweiten Halbform
- 7: Haken(form)
- 8: Hakenfuß
- 9: Hakenkopf
- 10: Ebene, innerhalb der Hakenfuß und Hakenkopf angeordnet sind
- 11: Spritzgussform
- 12: Längsachse
- 13: dritte Oberfläche der ersten Halbform
- 14: vierte Oberfläche der zweiten Halbform
- 15: weiterer Hohlraum in Form einer Grundplatte des Hakenklettverschluss-Verbindungsteils
- 16: Grundplatte des Hakenklettverschluss-Verbindungsteils
- 17: Doppelhakenkopf
- 18: Hakenklettverschluss-Verbindungsteil in Form einer Befestigungsvorrichtung für eine Kraftfahrzeug-Fußmatte
- 19: Befestigungsmittel der Grundplatte 16
- A: Ausschnitt aus Figur 2
- α: Winkel zwischen Ebene 10 und Längsachse 12
- β: Winkel zwischen Ebene 10 und Grundplatte 16

## Patentansprüche

1. Hakenklettverschluss-Verbindungsteil mit einer Vielzahl von Haken (7), welche auf einer Grundplatte (16) angeordnet sind, wobei die Haken (7) einen Hakenfuß (8) und einen Hakenkopf (9) aufweisen, und Hakenfuß (8) und Hakenkopf (9) innerhalb einer Ebene (10) angeordnet sind, **dadurch gekennzeichnet, dass** die Ebene (10) und die Grundplatte (16) in einem Winkel (β) größer 90° zueinander angewinkelt sind.

2. Hakenklettverschluss-Verbindungsteil gemäß Anspruch 1, wobei die Ebene (10) und die Grundplatte (16) in einem Winkel (β) von größer 90° bis 130° zueinander angewinkelt sind, weiter bevorzugt 95° bis 120°, und besonders bevorzugt 100° bis 110°.

3. Hakenklettverschluss-Verbindungsteil nach Anspruch 1 oder 2, wobei das Hakenklettverschluss-Verbindungsteil eine Befestigungsvorrichtung für eine Kraftfahrzeug-Fußmatte ist, welche mindestens eines der folgenden Merkmale aufweist:
- ein Befestigungsmittel (19) auf der Seite der Grundplatte (16), welche der Seite mit der Vielzahl von Haken (7) gegenüberliegt, wobei das Befestigungsmittel (19) zur Befestigung der Grundplatte (16) am Boden des Innenraums eines Kraftfahrzeugs dient, und die Grundplatte (16), die Vielzahl von Haken (7) und das Befestigungsmittel (19) einstückig gebildet sind;
- ein Befestigungsmittel (19) in Form einer Schraube oder eines T-förmigen Verankerungselements;
- ein Befestigungsmittel (19) weist eine ab der Grundplatte gemessene Länge von 0,4 bis 3 cm auf, bevorzugt 0,8 bis 2,4 cm, besonders bevorzugt 1,2 bis 1,8 cm.

4. Hakenklettverschluss-Verbindungsteil nach einem der vorhergehenden Ansprüche, welches mindestens eines der folgenden Merkmale aufweist:
- die Vielzahl der Haken (7) ist kreisförmig konzentrisch auf der Grundplatte angeordnet;
- jeder Haken (7) weist einen Hakenfuß (8) mit kreisförmigem Querschnitt mit einem Durchmesser von 0,3 bis 0,8 mm auf, bevorzugt 0,4 bis 0,7 mm, besonders bevorzugt 0,45 bis 0,6 mm;
- jeder Haken (7) weist einen Hakenkopf (9) auf, welcher einen Durchmesser gleich oder größer als der Durchmesser des Hakenfußes (8) aufweist, bevorzugt bis zu 25% mehr Durchmesser, als der Hakenfuß (8), weiter bevorzugt von 4% bis zu 22% mehr, noch weiter bevorzugt von 6 bis zu 18% mehr, besonders bevorzugt von 8 bis zu 12% mehr;
- jeder Haken (7) weist vom Hakenfuß (8) bis zum Hakenkopf (9) eine Höhe von 1,2 bis 4 mm auf, bevorzugt 1,5 bis 3 mm, besonders bevorzugt 1,8 bis 2,5 mm;
- die Grundplatte (16) des Hakenklettverschluss-Verbindungsteils ist kreisförmig und weist einen Durchmesser von 5 bis 10 cm und eine Dicke von 1 bis 5 mm auf, bevorzugt einen Durchmesser von 6 bis 8,5 cm und eine Dicke von 1,5 bis 4 mm, besonders bevorzugt einen Durchmesser von 6 bis 7,5 cm und eine Dicke von 2 bis 3 mm.

5. Hakenklettverschluss-Verbindungsteil nach einem der vorhergehenden Ansprüche, erhältlich durch ein Spritzgussverfahren unter Verwendung einer Vorrichtung zur Herstellung des Hakenklettverschluss-Verbindungsteils mittels eines Spritzgießverfahrens, umfassend:
eine Spritzgussform (11) mit einer Vielzahl von ersten und zweiten Halbformen (1;2), wobei jede erste Halbform (1) eine Vielzahl von ersten Hohlräumen (3) in einer ersten Oberfläche (4) und jede zweite Halbform (2) eine Vielzahl von zweiten Hohlräumen (5) in einer zweiten Oberfläche (6) aufweist, und erste und zweite Oberflächen (4;6) sich gegenüberliegen und kontaktieren, so dass der erste und zweite Hohlraum (3;5) gemeinsam einen Gesamthohlraum in der Hakenform (7) bilden,
wobei der Hakenfuß (8) mindestens durch den ersten Hohlraum (3) gebildet wird und der Hakenkopf (9) mindestens durch den zweiten Hohlraum (5) gebildet wird,
wobei die Spritzgussform (11) eine Längsachse (12) aufweist, entlang der die zweiten Halbformen (2) gegenüber den ersten Halbformen (1) verschiebbar sind, und
wobei die Ebene (10) und die Längsachse (12) zueinander angewinkelt sind.

6. Hakenklettverschluss-Verbindungsteil nach Anspruch 5, wobei die Vorrichtung zur Herstellung des Hakenklettverschluss-Verbindungsteils mindestens eines der folgenden Merkmale aufweist:
- die Ebene (10) und die Längsachse (12) sind mit einem Winkel (α) von bis zu 40°, bevorzugt 5° bis 30°, besonders bevorzugt 10° bis 20°, zueinander angewinkelt;
- die ersten und zweiten Oberflächen (4;6) der Vielzahl von ersten und zweiten Halbformen (1;2) sind parallel zueinander angeordnet, bevorzugt parallel zur Längsachse (12);
- der Hakenfuß (8) wird durch den ersten und zweiten Hohlraum (3;5) gebildet und der Hakenkopf (9) wird durch den zweiten Hohlraum (5) gebildet;
- der zweite Hohlraum (5) ist so dimensioniert, dass der Hakenkopf (9) einen Querschnitt gleich oder größer als der Querschnitt des Hakenfußes (8) aufweist;
- mindestens eine erste Halbform (1) weist auf zwei sich gegenüberliegenden Seiten jeweils eine erste Oberfläche (4) auf, und mindestens eine zweite Halbform (2) weist auf zwei sich gegenüberliegenden Seiten jeweils eine zweite Oberfläche (6) auf;
- die zweite Halbform (2) ist so gebildet, dass der Hakenkopf (9) als Doppelhakenkopf (17), dessen Hakenköpfe in 180° entgegengesetzte Richtungen zeigen, geformt wird;
- der Querschnitt von Hakenfuß (8) und/oder Hakenkopf (9) ist im Wesentlichen kreisförmig.

7. Hakenklettverschluss-Verbindungsteil nach Anspruch 5 oder 6, wobei die erste Halbform (1) der Vorrichtung zur Herstellung des Hakenklettverschluss-Verbindungsteils eine dritte Oberfläche (13) und die zweite Halbform (2) eine vierte Oberfläche (14) aufweist, und die dritte Oberfläche (13) an die erste Oberfläche (4) angrenzt und die vierte Oberfläche (14) an die zweite Oberfläche (6) angrenzt, wobei die dritte und vierte Oberfläche (13;14) gemeinsam eine Öffnung bilden, die den Querschnitt des unteren Endes des Hakenfußes (8) darstellt; bevorzugt mündet diese Öffnung in einen weiteren Hohlraum (15) in Form der Grundplatte (16) des Hakenklettverschluss-Verbindungsteils, so dass beim Ausspritzen der Spritzgussform das Hakenklettverschluss-Verbindungsteil mit der Vielzahl von auf der Grundplatte (16) gebildeten Haken (7) erhalten wird.

8. Hakenklettverschluss-Verbindungsteil nach Anspruch 7, wobei die Vorrichtung zur Herstellung des Hakenklettverschluss-Verbindungsteils mindestens eines der folgenden Merkmale aufweist:
- die dritte Oberfläche (13) ist rechtwinklig zur ersten Oberfläche (4) und die vierte Oberfläche (14) ist rechtwinklig zur zweiten Oberfläche (6);
- die zweiten Halbformen (2) sind in Richtung des weiteren Hohlraums (15) in Form der Grundplatte (16) des Hakenklettverschluss-Verbindungsteils verschiebbar, während die ersten Halbformen (1) ihre Position beibehalten;
- die dritten und vierten Oberflächen (13;14) sind planar.

9. Hakenklettverschluss-Verbindungsteil gemäß einem der Ansprüche 5-8,
wobei die ersten und zweiten Oberflächen (4;6) der Vorrichtung zur Herstellung des Hakenklettverschluss-Verbindungsteils planar und die zweiten Hohlräume (5) bevorzugt so gebildet sind, dass die Enden der Hakenkopfformen (9) jeweils die gleiche Orientierung aufweisen, oder
wobei die ersten und zweiten Halbformen (1;2) der Vorrichtung zur Herstellung des Hakenklettverschluss-Verbindungsteils konzentrisch zueinander angeordnet sind.

10. Hakenklettverschluss-Verbindungsteil nach Anspruch 9, wobei die ersten und zweiten Halbformen (1;2) der Vorrichtung zur Herstellung des Hakenklettverschluss-Verbindungsteils kreisförmig konzentrisch zueinander angeordnet und alle zweiten Hohlräume (5) bevorzugt so gebildet sind, dass alle Hakenkopfformen (9) im Wesentlichen tangential zur Kreisform der zweiten Halbform (2) gebildet sind und die Enden der Hakenkopfformen (9) jeweils die gleiche Orientierung aufweisen.

11. Hakenklettverschluss-Verbindungsteil gemäß einem der Ansprüche 7-10, wobei die durch die dritte und vierte Oberfläche (13;14) der Vorrichtung zur Herstellung des Hakenklettverschluss-Verbindungsteils gemeinsam gebildete Öffnung kreisförmig ist, und die dritte Oberfläche (13) ein Kreissegment mit 60-80% der Kreisformfläche der Öffnung bildet, und die vierte Oberfläche (14) ein Kreissegment mit 20-40% der Kreisformfläche der Öffnung bildet, mit der Maßgabe, dass die gesamte Kreisformfläche der Öffnung 100% beträgt; und/oder
die erste und zweite Halbform (1;2) der Vorrichtung zur Herstellung des Hakenklettverschluss-Verbindungsteils so dimensioniert sind, dass der Hakenkopf (9) einen Durchmesser gleich oder größer als der Durchmesser des Hakenfußes (8) aufweist, wobei der Hakenkopf (9) bevorzugt bis zu 25% mehr Durchmesser aufweist, als der Hakenfuß (8), weiter bevorzugt von 4% bis zu 22% mehr, noch weiter bevorzugt von 6 bis zu 18% mehr, besonders bevorzugt von 8 bis zu 12% mehr.

12. Hakenklettverschluss-Verbindungsteil nach einem der Ansprüche 5-11, erhältlich durch ein Spritzgussverfahren, in dem das Hakenklettverschluss-Verbindungsteil in der Spritzgussform (11) in einem Stück geformt wird.

13. Hakenklettverschluss-Verbindungsteil nach einem der Ansprüche 5-12, erhältlich durch ein Spritzgussverfahren umfassend die folgenden Schritte a) bis c):
a) Einspritzen von geschmolzenem Kunststoff in die Spritzgussform (11);
b) Abkühlen des geschmolzenen Kunststoffs in der Spritzgussform (11), bis der Kunststoff fest ist; und
c) Verschieben der zweiten Halbformen (2) entlang der Längsrichtung der Spritzgussform (11) in Richtung der Grundplatte (16) des Hakenklettverschluss-Verbindungsteils, auf der die Haken (7) gebildet sind, um die Hakenfüße (8) aus den ersten Halbformen (1) zu entformen.

14. Hakenklettverschluss-Verbindungsteil nach Anspruch 13, wobei das Spritzgussverfahren ferner folgenden Schritt d) umfasst:
d) Ziehen an der Grundplatte (16) des Hakenklettverschluss-Verbindungsteils, um in den zweiten Halbformen (2) befindliche Hakenköpfe (9) herauszuziehen.

15. Hakenklettverschluss-Verbindungsteil nach Anspruch 13,
wobei die ersten und zweiten Halbformen (1;2) der Vorrichtung zur Herstellung des Hakenklettverschluss-Verbindungsteils konzentrisch zueinander angeordnet sind, und
wobei das Spritzgussverfahren ferner folgenden Schritt d) umfasst:
d) Drücken auf die spritzgegossenen Hakenköpfe (9) bzw. die spritzgegossene Grundplatte (16) beim Entfernen bzw. Auswerfen durch gegenüber einander Verschieben der konzentrischen ersten und zweiten Halbformen (1;2).

## Geänderte Patentansprüche

### Geänderte Patentansprüche gemäss Regel 137(2) EPÜ.

1. Hakenklettverschluss-Verbindungsteil mit einer Vielzahl von Haken (7), welche auf einer Grundplatte (16) angeordnet sind, wobei die Haken (7) einen Hakenfuß (8) und einen Hakenkopf (9) aufweisen, wobei der Hakenkopf (9) eine Struktur, welche ein Verhaken mit einer filz- oder faserartigen Struktur eines Schlaufenelements bzw. Flauschteils ermöglicht, ist, und die Struktur eine gebogene bzw. runde Struktur ist oder eine winkelige bzw. eckige Form aufweist, oder die Struktur eine Mischform der vorgenannten Strukturen ist, und wobei Hakenfuß (8) und Hakenkopf (9) innerhalb einer Ebene (10) angeordnet sind, **dadurch gekennzeichnet, dass** die Ebene (10) und die Grundplatte (16) in einem Winkel (ß) größer 90° zueinander angewinkelt sind.

2. Hakenklettverschluss-Verbindungsteil gemäß Anspruch 1, wobei die Ebene (10) und die Grundplatte (16) in einem Winkel (ß) von größer 90° bis 130° zueinander angewinkelt sind, weiter bevorzugt 95° bis 120°, und besonders bevorzugt 100° bis 110°.

3. Hakenklettverschluss-Verbindungsteil nach Anspruch 1 oder 2, wobei das Hakenklettverschluss-Verbindungsteil eine Befestigungsvorrichtung für eine Kraftfahrzeug-Fußmatte ist, welche mindestens eines der folgenden Merkmale aufweist:
- ein Befestigungsmittel (19) auf der Seite der Grundplatte (16), welche der Seite mit der Vielzahl von Haken (7) gegenüberliegt, wobei das Befestigungsmittel (19) zur Befestigung der Grundplatte (16) am Boden des Innenraums eines Kraftfahrzeugs dient, und die Grundplatte (16), die Vielzahl von Haken (7) und das Befestigungsmittel (19) einstückig gebildet sind;
- ein Befestigungsmittel (19) in Form einer Schraube oder eines T-förmigen Verankerungselements;
- ein Befestigungsmittel (19) weist eine ab der Grundplatte gemessene Länge von 0,4 bis 3 cm auf, bevorzugt 0,8 bis 2,4 cm, besonders bevorzugt 1,2 bis 1,8 cm.

4. Hakenklettverschluss-Verbindungsteil nach einem der vorhergehenden Ansprüche, welches mindestens eines der folgenden Merkmale aufweist:
- die Vielzahl der Haken (7) ist kreisförmig konzentrisch auf der Grundplatte angeordnet;
- jeder Haken (7) weist einen Hakenfuß (8) mit kreisförmigem Querschnitt mit einem Durchmesser von 0,3 bis 0,8 mm auf, bevorzugt 0,4 bis 0,7 mm, besonders bevorzugt 0,45 bis 0,6 mm;
- jeder Haken (7) weist einen Hakenkopf (9) auf, welcher einen Durchmesser gleich oder größer als der Durchmesser des Hakenfußes (8) aufweist, bevorzugt bis zu 25% mehr Durchmesser, als der Hakenfuß (8), weiter bevorzugt von 4% bis zu 22% mehr, noch weiter bevorzugt von 6 bis zu 18% mehr, besonders bevorzugt von 8 bis zu 12% mehr;
- jeder Haken (7) weist vom Hakenfuß (8) bis zum Hakenkopf (9) eine Höhe von 1,2 bis 4 mm auf, bevorzugt 1,5 bis 3 mm, besonders bevorzugt 1,8 bis 2,5 mm;
- die Grundplatte (16) des Hakenklettverschluss-Verbindungsteils ist kreisförmig und weist einen Durchmesser von 5 bis 10 cm und eine Dicke von 1 bis 5 mm auf, bevorzugt einen Durchmesser von 6 bis 8,5 cm und eine Dicke von 1,5 bis 4 mm, besonders bevorzugt einen Durchmesser von 6 bis 7,5 cm und eine Dicke von 2 bis 3 mm.

5. Hakenklettverschluss-Verbindungsteil nach einem der vorhergehenden Ansprüche, erhältlich durch ein Spritzgussverfahren unter Verwendung einer Vorrichtung zur Herstellung des Hakenklettverschluss-Verbindungsteils mittels eines Spritzgießverfahrens, umfassend:
eine Spritzgussform (11) mit einer Vielzahl von ersten und zweiten Halbformen (1;2), wobei jede erste Halbform (1) eine Vielzahl von ersten Hohlräumen (3) in einer ersten Oberfläche (4) und jede zweite Halbform (2) eine Vielzahl von zweiten Hohlräumen (5) in einer zweiten Oberfläche (6) aufweist, und erste und zweite Oberflächen (4;6) sich gegenüberliegen und kontaktieren, so dass der erste und zweite Hohlraum (3;5) gemeinsam einen Gesamthohlraum in der Hakenform (7) bilden,
wobei der Hakenfuß (8) mindestens durch den ersten Hohlraum (3) gebildet wird und der Hakenkopf (9) mindestens durch den zweiten Hohlraum (5) gebildet wird,
wobei die Spritzgussform (11) eine Längsachse (12) aufweist, entlang der die zweiten Halbformen (2) gegenüber den ersten Halbformen (1) verschiebbar sind, und
wobei die Ebene (10) und die Längsachse (12) zueinander angewinkelt sind.

6. Hakenklettverschluss-Verbindungsteil nach Anspruch 5, wobei die Vorrichtung zur Herstellung des Hakenklettverschluss-Verbindungsteils mindestens eines der folgenden Merkmale aufweist:
- die Ebene (10) und die Längsachse (12) sind mit einem Winkel (a) von bis zu 40°, bevorzugt 5° bis 30°, besonders bevorzugt 10° bis 20°, zueinander angewinkelt;
- die ersten und zweiten Oberflächen (4;6) der Vielzahl von ersten und zweiten Halbformen (1;2) sind parallel zueinander angeordnet, bevorzugt parallel zur Längsachse (12);
- der Hakenfuß (8) wird durch den ersten und zweiten Hohlraum (3;5) gebildet und der Hakenkopf (9) wird durch den zweiten Hohlraum (5) gebildet;
- der zweite Hohlraum (5) ist so dimensioniert, dass der Hakenkopf (9) einen Querschnitt gleich oder größer als der Querschnitt des Hakenfußes (8) aufweist;
- mindestens eine erste Halbform (1) weist auf zwei sich gegenüberliegenden Seiten jeweils eine erste Oberfläche (4) auf, und mindestens eine zweite Halbform (2) weist auf zwei sich gegenüberliegenden Seiten jeweils eine zweite Oberfläche (6) auf;
- die zweite Halbform (2) ist so gebildet, dass der Hakenkopf (9) als Doppelhakenkopf (17), dessen Hakenköpfe in 180° entgegengesetzte Richtungen zeigen, geformt wird;
- der Querschnitt von Hakenfuß (8) und/oder Hakenkopf (9) ist im Wesentlichen kreisförmig.

7. Hakenklettverschluss-Verbindungsteil nach Anspruch 5 oder 6, wobei die erste Halbform (1) der Vorrichtung zur Herstellung des Hakenklettverschluss-Verbindungsteils eine dritte Oberfläche (13) und die zweite Halbform (2) eine vierte Oberfläche (14) aufweist, und die dritte Oberfläche (13) an die erste Oberfläche (4) angrenzt und die vierte Oberfläche (14) an die zweite Oberfläche (6) angrenzt, wobei die dritte und vierte Oberfläche (13;14) gemeinsam eine Öffnung bilden, die den Querschnitt des unteren Endes des Hakenfußes (8) darstellt; bevorzugt mündet diese Öffnung in einen weiteren Hohlraum (15) in Form der Grundplatte (16) des Hakenklettverschluss-Verbindungsteils, so dass beim Ausspritzen der Spritzgussform das Hakenklettverschluss-Verbindungsteil mit der Vielzahl von auf der Grundplatte (16) gebildeten Haken (7) erhalten wird.

8. Hakenklettverschluss-Verbindungsteil nach Anspruch 7, wobei die Vorrichtung zur Herstellung des Hakenklettverschluss-Verbindungsteils mindestens eines der folgenden Merkmale aufweist:
- die dritte Oberfläche (13) ist rechtwinklig zur ersten Oberfläche (4) und die vierte Oberfläche (14) ist rechtwinklig zur zweiten Oberfläche (6);
- die zweiten Halbformen (2) sind in Richtung des weiteren Hohlraums (15) in Form der Grundplatte (16) des Hakenklettverschluss-Verbindungsteils verschiebbar, während die ersten Halbformen (1) ihre Position beibehalten;
- die dritten und vierten Oberflächen (13;14) sind planar.

9. Hakenklettverschluss-Verbindungsteil gemäß einem der Ansprüche 5-8,
wobei die ersten und zweiten Oberflächen (4;6) der Vorrichtung zur Herstellung des Hakenklettverschluss-Verbindungsteils planar und die zweiten Hohlräume (5) bevorzugt so gebildet sind, dass die Enden der Hakenkopfformen (9) jeweils die gleiche Orientierung aufweisen, oder wobei die ersten und zweiten Halbformen (1;2) der Vorrichtung zur Herstellung des Hakenklettverschluss-Verbindungsteils konzentrisch zueinander angeordnet sind.

10. Hakenklettverschluss-Verbindungsteil nach Anspruch 9, wobei die ersten und zweiten Halbformen (1;2) der Vorrichtung zur Herstellung des Hakenklettverschluss-Verbindungsteils kreisförmig konzentrisch zueinander angeordnet und alle zweiten Hohlräume (5) bevorzugt so gebildet sind, dass alle Hakenkopfformen (9) im Wesentlichen tangential zur Kreisform der zweiten Halbform (2) gebildet sind und die Enden der Hakenkopfformen (9) jeweils die gleiche Orientierung aufweisen.

11. Hakenklettverschluss-Verbindungsteil gemäß einem der Ansprüche 7-10, wobei die durch die dritte und vierte Oberfläche (13;14) der Vorrichtung zur Herstellung des Hakenklettverschluss-Verbindungsteils gemeinsam gebildete Öffnung kreisförmig ist, und die dritte Oberfläche (13) ein Kreissegment mit 60-80% der Kreisformfläche der Öffnung bildet, und die vierte Oberfläche (14) ein Kreissegment mit 20-40% der Kreisformfläche der Öffnung bildet, mit der Maßgabe, dass die gesamte Kreisformfläche der Öffnung 100% beträgt; und/oder
die erste und zweite Halbform (1;2) der Vorrichtung zur Herstellung des Hakenklettverschluss-Verbindungsteils so dimensioniert sind, dass der Hakenkopf (9) einen Durchmesser gleich oder größer als der Durchmesser des Hakenfußes (8) aufweist, wobei der Hakenkopf (9) bevorzugt bis zu 25% mehr Durchmesser aufweist, als der Hakenfuß (8), weiter bevorzugt von 4% bis zu 22% mehr, noch weiter bevorzugt von 6 bis zu 18% mehr, besonders bevorzugt von 8 bis zu 12% mehr.

12. Hakenklettverschluss-Verbindungsteil nach einem der Ansprüche 5-11, erhältlich durch ein Spritzgussverfahren, in dem das Hakenklettverschluss-Verbindungsteil in der Spritzgussform (11) in einem Stück geformt wird.

13. Hakenklettverschluss-Verbindungsteil nach einem der Ansprüche 5-12, erhältlich durch ein Spritzgussverfahren umfassend die folgenden Schritte a) bis c):
a) Einspritzen von geschmolzenem Kunststoff in die Spritzgussform (11);
b) Abkühlen des geschmolzenen Kunststoffs in der Spritzgussform (11), bis der Kunststoff fest ist; und
c) Verschieben der zweiten Halbformen (2) entlang der Längsrichtung der Spritzgussform (11) in Richtung der Grundplatte (16) des Hakenklettverschluss-Verbindungsteils, auf der die Haken (7) gebildet sind, um die Hakenfüße (8) aus den ersten Halbformen (1) zu entformen.

14. Hakenklettverschluss-Verbindungsteil nach Anspruch 13, wobei das Spritzgussverfahren ferner folgenden Schritt d) umfasst:
d) Ziehen an der Grundplatte (16) des Hakenklettverschluss-Verbindungsteils, um in den zweiten Halbformen (2) befindliche Hakenköpfe (9) herauszuziehen.

15. Hakenklettverschluss-Verbindungsteil nach Anspruch 13,
wobei die ersten und zweiten Halbformen (1;2) der Vorrichtung zur Herstellung des Hakenklettverschluss-Verbindungsteils konzentrisch zueinander angeordnet sind, und
wobei das Spritzgussverfahren ferner folgenden Schritt d) umfasst:
d) Drücken auf die spritzgegossenen Hakenköpfe (9) bzw. die spritzgegossene Grundplatte (16) beim Entfernen bzw. Auswerfen durch gegenüber einander Verschieben der konzentrischen ersten und zweiten Halbformen (1;2).
